(19) Europäisches Patentamt
European Patent Office
Office européen des brevets

(11) **EP 4 369 283 A2**

(12) **EUROPEAN PATENT APPLICATION**

(43) Date of publication:
**15.05.2024 Bulletin 2024/20**

(21) Application number: **23176811.0**

(22) Date of filing: **01.06.2023**

(51) International Patent Classification (IPC):
***G06T 3/4046*** *(2024.01)* ***G06T 3/4053*** *(2024.01)*

(52) Cooperative Patent Classification (CPC):
**G06T 3/4053; G06T 3/4046**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.11.2022 KR 20220149550**

(71) Applicant: **Samsung Electronics Co., Ltd.**
**Suwon-si, Gyeonggi-do 16677 (KR)**

(72) Inventors:
- **MOON, Jaeyoung**
  **16678 Suwon-si (KR)**
- **KANG, Nahyup**
  **16678 Suwon-si (KR)**
- **KIM, Hanjun**
  **16678 Sunwon-si (KR)**
- **YU, Hyeonseung**
  **16678 Suwon-si (KR)**
- **LEE, Juyoung**
  **16678 Suwon-si (KR)**
- **JUNG, Hwiryong**
  **16678 Suwon-si (KR)**
- **HA, Inwoo**
  **16678 Suwon-si (KR)**
- **HONG, Seokpyo**
  **16678 Suwon-si (KR)**

(74) Representative: **Arnold & Siedsma**
**Bezuidenhoutseweg 57**
**2594 AC The Hague (NL)**

(54) **METHOD AND APPARATUS WITH SUPERSAMPLING**

(57) A supersampling method and apparatus are provided. The method includes: receiving a low-resolution three-dimensional (3D) image comprising a current frame and receiving a previous frame preceding the current frame; generating a low-resolution partial image by repeatedly sampling sub-pixel regions of the current frame; warping a high-resolution image, of the previous frame, which has been outputted from a neural network, to a current view corresponding to the current frame; replacing a partial region of the warped high-resolution image of the previous frame with image data from the low-resolution partial image; and generating a high-resolution image of the current frame by applying the high-resolution image of the previous frame, in which the partial region has been replaced, to the neural network.

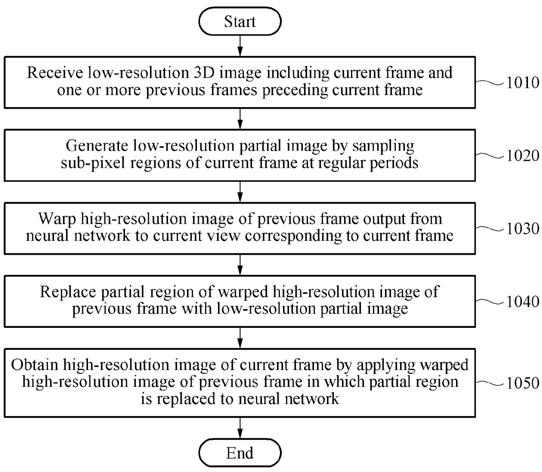


FIG. 10



Processed by Luminess, 75001 PARIS (FR)

## Description

BACKGROUND

1. Field

The following description relates to an apparatus and method with supersampling.

2. Description of Related Art

Supersampling may be used as an antialiasing technique, i.e., a technique for reducing aliasing ("jaggies"). Supersampling is often used for smoothing images generated by computer games or other programs that produce images. For example, a neural network supersampling technique based on a deep learning neural network may be used for antialiasing.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a supersampling method includes: receiving a low-resolution three-dimensional (3D) image comprising a current frame and receiving a previous frame preceding the current frame; generating a low-resolution partial image by repeatedly sampling sub-pixel regions of the current frame; warping a high-resolution image, of the previous frame, which has been outputted from a neural network, to a current view corresponding to the current frame; replacing a partial region of the warped high-resolution image of the previous frame with image data from the low-resolution partial image; and generating a high-resolution image of the current frame by applying the high-resolution image of the previous frame, in which the partial region has been replaced, to the neural network.

The generating of the low-resolution partial image may include: determining sub-pixel regions of one pixel region of the current frame by dividing the one pixel region into one high-resolution pixel region that is to be up-scaled; and generating a low-resolution partial image corresponding to each of the sub-pixel regions by sampling each of the sub-pixel regions at regular periods.

The generating of the low-resolution partial image may include: determining sub-pixel regions of one pixel region of the current frame by dividing the one pixel region into the one high-resolution pixel region that is to be up-scaled; at a first time, performing a first sampling at first sample points in the respective sub-pixel regions of the one pixel region; at a second time, performing a second sampling at second sample points in the respective sub-pixel regions of the one pixel region; and generating the low-resolution partial image according to the first sampling and generating a second low-resolution partial image according to the second sampling.

The replacing may be based on a disocclusion map.

The replacing may include dividing the warped high-resolution image of the previous frame into a set of low-resolution partial images of respectively corresponding channels; and replacing the divided partial images with the generated low-resolution partial image.

The warping may is based on a low-resolution motion vector map corresponding to the current frame and the previous frame.

The low-resolution motion vector map may indicate movement relationships between first pixels of the current frame and second pixels of the previous frame, and the method may further include generating the low-resolution motion vector map by rendering the low-resolution 3D image.

The method may include up-scaling the low-resolution motion vector map to a high-resolution scaled motion vector map.

The up-scaling may be performed using an up-scaling filter comprising a nearest neighborhood filter, a bilinear filter, or a bicubic filter.

The warping may include warping the high-resolution image of the previous frame output from the neural network to the current view based on the high-resolution scaled motion vector map.

The method may further include comparing the previous frame with the current frame; and based on the comparing, generating a disocclusion map that identifies disocclusion regions of the current frame that were not visible in the previous frame and that are visible in the current frame.

The disocclusion regions may be identified by instances of a first value in the disocclusion map and non-disocclusion regions may be identified by instances of a second value in the disocclusion map.

The method may further include masking the warped high-resolution image of the previous frame using the disocclusion map.

The masking may include applying the disocclusion map to the warped high-resolution image of the previous frame such that: a region of the warped high-resolution image corresponding to a disocclusion region of the disocclusion map is cleared, and a region of the warped high-resolution image corresponding to a non-occlusion region of the disocclusion map retains its original pixel values.

The replacing may include replacing a partial region of the high-resolution image of the previous frame masked by the disocclusion map with image data from the low-resolution partial image.

The neural network may have an input resolution and an output resolution that are the same.

A non-transitory computer-readable storage medium may store instructions that, when executed by a processor, cause the processor to perform any of the methods.

In another general aspect, a supersampling apparatus includes: storage storing a low-resolution three-dimensional (3D) image comprising a current frame and storing a previous frame preceding the current frame; and one or more processors configured to generate a low-resolution image by sampling the current frame, warp a high-resolution image of the previous frame outputted from a neural network to a current view corresponding to the current frame, replace a partial region of the warped high-resolution image of the previous frame with image data from the low-resolution image, and generating a high-resolution image of the current frame by applying the high-resolution image of the previous frame in which the partial region has been replaced to the neural network.

The processor may be further configured to: determine sub-pixel regions of the current frame by dividing one pixel region of the current frame into one high-resolution pixel region to be up-scaled and generate the low-resolution by sampling each of the sub-pixel regions.

A memory may include the neural network, and the neural network may have been trained to output the high-resolution image of the current frame in response to the high-resolution image of the previous frame being input.

Other features and aspects will be apparent from the following detailed description, the drawings, and the claims.

## BRIEF DESCRIPTION OF THE DRAWINGS

FIG. 1 illustrates an example supersampling apparatus, according to one or more embodiments.

FIG. 2 illustrates an example configuration and operation of a supersampling apparatus, according to one or more embodiments.

FIG. 3 illustrates an example method of sampling sub-pixel regions at regular periods, according to one or more embodiments.

FIG. 4 illustrates an example using a motion vector map to warp a current frame to a previous frame, according to one or more embodiments.

FIG. 5 illustrates an example method of replacing a partial region of a high-resolution image of a previous frame with image data from a low-resolution partial image, according to one or more embodiments.

FIG. 6 illustrates an example configuration and operation of a supersampling apparatus that up-scales a motion vector, according to one or more embodiments.

FIG. 7 illustrates an example configuration and operation of a supersampling apparatus that performs sampling according to a double period, according to one or more embodiments.

FIG. 8 illustrates an example method of performing sampling according to a double sampling period in the supersampling apparatus of FIG. 7, according to one or more embodiments.

FIG. 9 illustrates an example configuration and operation of a supersampling apparatus that performs masking using a disocclusion map, according to one or more embodiments.

FIG. 10 illustrates an example supersampling method, according to one or more embodiments.

FIG. 11 illustrates an example supersampling method, according to one or more embodiments.

FIG. 12 illustrates an example supersampling method, according to one or more embodiments.

FIG. 13 illustrates an example supersampling method, according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

## DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As nonlimiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

FIG. 1 illustrates an example supersampling apparatus 100. The supersampling apparatus 100 includes a communication interface 110 and a processor 130. The supersampling apparatus 100 may further include a memory 150.

The communication interface 110 may receive low-resolution three-dimensional (3D) images, for instance, a current frame and one or more previous frames preceding the current frame. The current frame and the one or more previous frames may be two-dimensional (2D) low-resolution image frames. The 3D images may be, for example, images of a scene of a game, a scene of a movie, or a scene including 3D screen image (e.g., a navigation scene) provided by various visualization functions of an automobile infotainment system, but are not limited thereto.

The processor 130 generates a low-resolution partial image by sampling sub-pixel regions of the current frame at regular periods. For example, the processor 130 may determine sub-pixel regions by dividing a pixel region of the current frame into a high-resolution pixel region to be up-scaled (multiple regions of a frame may be upscaled). The processor 130 may generate a low-resolution partial image corresponding to each of the sub-pixel regions by sampling each of the sub-pixel regions at regular periods. A method by which the processor 130 may generate the low-resolution partial image is described with reference to FIG. 3.

The processor 130 warps a high-resolution image of a previous frame (output from a neural network) to a current view corresponding to the current frame. The warping may be based on a low-resolution motion vector map representing motion from the current frame back to the previous frame. Here, warping is not forward warping, which maps the corresponding points of an input image to a target image using a motion vector map, but instead is backward warping where an input image is mapped and imported using a motion vector map at the corresponding point of the target image. Hereinafter, the term "warp/warping" means backward warping.

The "motion vector map" represents a matching relationship between first pixels of the current frame and second pixels of the previous frame. The "matching relationship" indicates which second pixels are matched with the first pixels and a moving distance between first and second pixels that match each other. A motion vector map representing movement between pixels of the previous frame and the current frame may be referred to as a "backward motion vector map", and a motion vector map representing the moving distance between pixels of the current frame that match each other in the previous frame may be referred to as a "forward motion vector map". Hereinafter, the term "motion vector" means a backward motion vector map. The motion vector map may be generated by rendering a low-resolution 3D image. A method by which the processor 130 generates the motion vector map is described with reference to FIG. 4.

The processor 130 replaces a partial region of a high-resolution image of the previous frame that has been warped with a low-resolution partial image generated from the current frame. The processor 130 may replace a partial region corresponding to the sub-pixel regions of the current frame in the high-resolution image of the previous frame that has been warped with image data from a low-resolution partial image. A method by which the processor 130 replaces the partial region of the high-resolution image of the previous frame that has been warped with the low-resolution partial image corresponding to the current frame is described with reference to FIG. 5.

The processor 130 obtains a high-resolution image of the current frame by applying, to the neural network, the high-resolution image of the previous frame in which the partial region has been replaced. The neural network may be pre-trained for receiving a high-resolution image of a previous frame and based thereon outputting/generating a high-resolution image of a current frame. The neural network may be a deep neural network or a recurrent neural network, but is not limited thereto. An example configuration of the processor 130 is described with reference to FIG. 2.

The processor 130 may execute a program and control the supersampling apparatus 100. The code/instructions of the program may be stored in the memory 150.

In addition, the processor 130 may perform at least one method described with reference to FIGS. 1 to 13 or a scheme corresponding to the at least one method. The processor 130 may be, for example, a mobile application processor (AP), but is not limited thereto. The processor 130 may be a supersampling apparatus implemented by hardware including a circuit having a physical structure to perform desired operations. For example, the desired operations may include code or instructions included in a program. The hardware-implemented supersampling apparatus 100 may include, for example, a microprocessor, a central processing unit (CPU), a graphics processing unit (GPU), a processor core, a multi-core processor, a multiprocessor, an application-specific integrated circuit (ASIC), a field-programmable gate array (FPGA), and/or a neural processing unit (NPU). The term "the processor" is used herein in the singular for convenience but refers to any combination of processing hardware or processors (for example, those just mentioned).

The memory 150 may include a pre-trained neural network for outputting a high-resolution image of a current frame when it receives a high-resolution image of a previous frame. In addition, the memory 150 may store a variety of information generated from processing by at least one program and/or the processor 130. The memory 150 may store, for example, a motion vector map generated by the processor 130, a low-resolution partial image, an up-scaling filter, a disocclusion map and/or a disocclusion mask, but is not limited thereto.

In addition, the memory 150 may store a variety of data and programs. The memory 150 may include a volatile memory and/or a non-volatile memory. The memory 150 may include a large-capacity storage medium such as a hard disk to store a variety of data.

FIG. 2 illustrates an example configuration and operation of a supersampling apparatus 200. The supersampling apparatus 200 may include, for example, a renderer 210, a backward warping module 230, a replace module 250, and a neural network 270.

The renderer 210, the backward warping module 230, and the replace module 250 may be respective modules of the processor 130 as illustrated in FIG. 1. The neural network 270 may be included in the processor 130, may be stored in the memory 150, or may be in a separate cloud server, for example.

The renderer 210 may generate a variety of low-resolution 2D images from a 3D image input to the renderer 210. The 3D image may include, for example, various information related to object animation and/or camera animation included in a corresponding scene, e.g., a 3D model of the scene, a 3D volume of voxels, etc. and may include information such as a viewpoint and viewing direction. The 2D images generated by the renderer 210 may include a low-resolution RGB image, a normal map, a depth map and/or a motion vector map, but are not limited thereto.

The renderer 210 may include a motion vector render module 213 and a periodic low-resolution (LR) image render module 216. The motion vector render module 213 may generate a motion vector map with low resolution when the renderer 210 generates various 2D images from an input 3D image. The motion vector map may indicate which pixels of a previous frame match which respective pixels of a current frame. The motion vector map is described with reference to FIG. 4.

The periodic LR image render module 216 may generate a low-resolution partial image corresponding to the current frame through periodic sampling according to regular periods when the renderer 210 generates various 2D images from the input 3D image. "Periodic sampling" may involve dividing a region of pixels to be sampled in a current frame at regular periods and sampling the divided region of pixels at intervals when sampling is performed to generate a low-resolution partial image. The periodic LR image render module 216 may generate a low-resolution partial image (a periodic sampled $LR_i$ image) by sampling sub-pixel regions obtained by dividing the pixel region of the current frame based on the high resolution to be up-scaled at regular periods. The periodic LR image render module 216 may generate a low-resolution partial image by, for example, sampling the sub-pixel regions of the current frame by uniform periodic sampling at regular periods. Here, the size of the low-resolution partial image may correspond to the size of one sub-pixel region. A method by which the periodic LR image render module 216 performs uniform periodic sampling on pixel regions of the current frame is described with reference to FIG. 3.

The backward warping module 230 may backward warp the high-resolution image HR $_{i-1}$ of the previous frame (previously output from the neural network 270) to correspond to a current view of the current frame. That is, the backward warping module 230 may output a high-resolution image that it warps from a previous view to the current view by applying a corresponding motion vector map to the high-resolution image ($HR_{i-1}$) of the previous frame.

The replace module 250 may replace a partial region of the warped high-resolution image of the previous frame (having been warped to the current view by the backward warping module 230) with image data from a low-resolution partial image generated/rendered by the periodic LR image render module 216 (which generates LR partial images at regular intervals). A method by which the replace module 250 replaces the partial region of the high-resolution image of the previous frame with the low-resolution partial image is described with reference to FIG. 5.

The high-resolution image of the previous frame (in which a partial region is replaced) outputted from the replace module 250 is applied to the neural network 270 to infer the high resolution image of the current frame (which later functions as the previous-frame high-resolution image for the next frame). The input and output resolutions of the neural network 270 may be the same (and in high resolution). As noted, the high-resolution image of the current frame output from the neural network 270 may be used as an input of the backward warping module 230 for a next frame. As used herein "high-resolution" and "low-resolution" do not imply any particular resolutions and are used only to indicate a relative difference in resolution.

The input and output structures of the neural network 270 may be configured with a frame recurrent structure so that samples may be accumulated throughout the frame being processed. The frame recurrent structure may allow the samples accumulated by cyclically applying samples (e.g., high-resolution images of the current frame) output from the neural network 270 to the neural network 270 over several frames. In this example, when a low-resolution image is sampled only in one pixel region of the image frame, it may be difficult to accumulate various information. This is because, for example, when an object and a camera are stationary, only the same value may be obtained when the samples are accumulated over several image frames.

In order to prevent sampling from being performed on only one pixel region of an image frame, the supersampling apparatus 200 may generate a low-resolution partial image through periodic sampling and replace the generated low-resolution partial image with a partial region of a high-resolution image of a previous frame. The supersampling apparatus 200 may replace a periodically rendered low-resolution partial image of the current frame with a partial region of the high-resolution image of the previous frame output from the neural network 270 at a previous view and use the partial image as an input of the neural network 270. To this end, the renderer 210 may perform uniform periodic sampling. Here, "uniform periodic sampling" may involve sampling in a periodic rotation by uniformly dividing one pixel region of a low-resolution image into one pixel region of a high-resolution image to be up-scaled when rendering a low-resolution image and adjusting the sampling position to the position of the one pixel of the high-resolution image. For example, when a scaling factor is 2, the one pixel region of the low-resolution image may be uniformly divided into four regions corresponding to the one pixel region of the high-resolution image. The renderer 210 may periodically sample the four uniformly divided regions. The scaling factor may be a length ratio of a horizontal or vertical axis and may be proportional to the square of the scale.

In an example, the supersampling apparatus 200 may accumulate more samples over an entire image frame through uniform periodic sampling. Uniform periodic sampling may be suitable for the neural network's 270 frame recurrent structure which accumulates samples over several image frames.

The supersampling apparatus 200 may replace a low-resolution image sampled through uniform periodic sampling with a pixel region corresponding to a high-resolution image outputted from the neural network 270 for the previous view. When compared to a scheme that simply merges a low-resolution image with a high-resolution image output from the neural network 270, the replacement scheme may reduce the amount of input memory and computation, thereby enabling neural supersampling to be performed even in mobile terminals.

In addition, by replacing a partial region of a high-resolution image of a previous view (previously outputted from the neural network 270) with a low-resolution partial image obtained through uniform periodic sampling and by using the partial image as an input to the neural network 270, the supersampling apparatus 200 may acquire an improved image restoration ability compared to the scheme of simply merging the low-resolution image with the high-resolution image.

FIG. 3 illustrates an example 300 method of sampling sub-pixel regions at regular periods, according to one or more embodiments. The example 300 method involves the periodic LR image render module 216 performing uniform periodic sampling.

The periodic LR image render module 216 may uniformly divide one pixel region 301 of a low-resolution current frame into one pixel region 303 of a high-resolution image to be up-scaled. In this example, the size of one pixel region 301 of the low-resolution current frame may be proportional to a scaling factor (or sampling density) of the one pixel region 303 of the high-resolution image. Here, the scaling factor may be a factor by which the low-resolution current frame is up-scaled by up-sampling.

The one pixel region 303 is delineated by the broken-dash line in FIG. 3 and corresponds to one pixel of the low-resolution current frame. The one pixel region 303 is representative of all of the pixels in the low-resolution current frame. That is to say, the periodic uniform sampling described with reference to the one pixel region 303 may be performed for each pixel of the low-resolution current frame.

When the scaling factor is 2, for example, the one pixel region 301 of the low-resolution image may be uniformly divided two times in each dimension, i.e., into four one pixel regions 303 of the high-resolution image (as it is generated). The periodic LR image render module 216 may periodically sample the four uniformly divided regions.

The periodic LR image render module 216 may adjust (set) a sampling position 305 of the low-resolution current frame to a pixel position (e.g., sampling points 310-340) of the high-resolution image and accordingly perform periodic sampling at regular periods to generate a low-resolution partial image (the partial aspect is explained below). In this example, the sampling points 310-340 may respectively correspond to the four regions into which the one pixel region 301 (of the low-resolution image) has been uniformly divided. Using i as an index of a position of each sub-pixel region, the sampling point 310 may be for a 0-th sub-pixel region (i % 4 == 0, "%" = modulo). Sampling point 320 may be for a 1-th sub-pixel region (i % 4 == 1). Sampling point 310 may be for a 3-th sub-pixel region (i % 4 == 2). And sampling point 320 may be for a 3-th sub-pixel region (i % 4 == 3).

In sum, the four pixel regions of the current frame may be obtained by dividing the one pixel region 301 (of the low-resolution current frame) into the size of the one pixel region 303 of the high-resolution image and the four pixel regions may be also referred to as low-resolution "sub-pixel regions".

The supersampling apparatus may generate low-resolution partial images respectively corresponding to each of the sub-pixel regions by sampling each of the four sub-pixel regions once per a predetermined period (e.g., period t1). For example, when the predetermined period is "4", the periodic LR image render module 216 may periodically sample (or render) the sub-pixel regions in the order of the sampling point 310, sampling point 320, sampling point 330, and sampling point 340.

Because the supersampling apparatus samples one sub-pixel region per period t1 (e.g., 4), the supersampling apparatus may sample all positions of the four sub-pixel regions per period. Because the supersampling apparatus samples all positions of the sub-pixel regions per period, for example, when an object and a camera are stationary or a camera constantly moves only in a predetermined direction, sampling being performed only at one sampling point 305 at low-resolution may be prevented and sampling values for more detailed regions such as high-resolution images may be obtained.

For example, when all objects in an image are stationary during the period t1, and the camera is also stationary, the supersampling apparatus may obtain an original high-resolution image for each period t1. The supersampling apparatus may correct the motion of an object or camera in the original high-resolution image via the backward warping module 230 described above.

FIG. 4 illustrates an example 400 of using a motion vector map to warp a current frame Frame i 415 (of a current view) to a previous frame Frame i-1 411, where the motion vector map is generated by rendering a low-resolution 3D image.

The motion vector map may include motion vectors respectively indicating matching relationships (e.g., a moving distances) between first pixels of the current frame Frame i 415 and second pixels of the previous frame Frame i-1 411. The "motion vector(s)" may define, for example, a position where a minimum point visible in the current frame i 415 appears in the previous frame i-1 411 without visibility and color information. However, any known technique for determining motion vectors may be used.

The geometric shapes in Frame i 415 (circle and triangle) correspond to the geometric shapes in Frame i-1 411 (circle and occluded triangle) after movement of same. As noted, the motion vectors may indicate which pixels of the current frame Frame i 415 match which respective pixels of the previous frame Frame i-1 411, as illustrated in example 410. That is, a motion vector may indicate a moving delta between a first pixel of the current frame Frame i 415 and a second pixel located at a position corresponding to the first pixel in the previous frame Frame i-1 411.

An example 430 illustrates a process of calculating a backward motion vector between the current frame Frame i 415 and the previous frame Frame i-1 411.

The supersampling apparatus may, for example, project a first pixel $x_i$ at a position corresponding to a triangle in the 2D current frame Frame i 415 into a 3D space by an inverse projection function $\boldsymbol{P}_i^{-1}$, and then transform the first pixel $x_i$ into a 3D scene space corresponding to a previous view of the previous frame Frame i-1 411 by a transformation function $\boldsymbol{T}_{i-1\rightarrow i}^{-1}$. The supersampling apparatus may express the first pixel $x_i$ (transformed into the previous view) as a second pixel $x_{i-1}$ in a 2D screen space by a projection function $\boldsymbol{P}_{i-1}$.

Here, the relationship between the first pixel $x_i$ of the current frame Frame i 415 and the second pixel $x_{i-1}$ of the previous frame Frame i-1 411 may be expressed by Equation 1.

Equation 1

$$x_{i-1} = \boldsymbol{P}_{i-1}\boldsymbol{T}_{i-1\rightarrow i}^{-1}\boldsymbol{P}_i^{-1}x_i$$

In addition, a backward motion vector $m(x_i)$ be-

tween the first pixel $x_i$ of the current frame Frame i 415 and the second pixel $x_i$-1 of the previous frame Frame i-1 411 may be expressed by Equation 2.

Equation 2

$$m(x_i) = x_{i-1} - x_i$$

The motion vector may have two channels (matrices/images), x and y, in a low-resolution size. The value of each pixel in a channel may correspond to a difference between a position of the corresponding pixel in the current frame and a position of the corresponding pixel in the previous frame (here "corresponding" refers to the pixels representing a same feature or point of the scene). A process in which the supersampling apparatus performs warping using motion vectors may be as follows. Warping (or mapping) may move an image value to a position of a corresponding pixel using a motion vector.

The supersampling apparatus may perform warping (mapping) using the backward motion vector map obtained through the above-described process. In forward mapping, values of an input image may be mapped to a target image as much as the moving distances of pixels using motion vectors. In addition, backward mapping may bring values of an input image as much as the moving distances of pixels from a target image using motion vectors and map the values. Hereinafter, without separate description, the term "warp/warping" may be understood to refer to "backward warping (mapping)" which is performed using a backward motion vector.

For example, as illustrated in example 410, when pixels corresponding to the right-side triangle are matched in each of the current frame Frame i 415 and the previous frame Frame i-1 411 by the supersampling apparatus, disocclusion of the portion of the triangle covered by the circle in the previous frame Frame i-1 411 may occur due to movement with the flow of time and the previously-occluded portion of the triangle emerges in the current frame Frame i 415.

When disocclusion occurs, the pixels at the position corresponding to the triangle in the current frame Frame i 415 and the pixels at the position corresponding to the triangle in the previous frame Frame i-1 411 may be different. Therefore, even when information of the previous frame Frame i-1 411 is retrieved and used to improve the resolution of the current frame Frame i 415, colors of the different objects may be undesirably combined, which may cause artifacts.

In some implementations, the supersampling apparatus may prevent the generation of artifacts due to disocclusion via a disocclusion map module 915 and a disocclusion masking module 940, as described with reference to FIG. 9.

FIG. 7 illustrates an example configuration and operation of the supersampling apparatus that performs sampling according to a double period using a double periodic LR image render module 716. FIG. 8 illustrates an example 800 method of performing sampling according to a double sampling period in the supersampling apparatus of FIG. 7. The example 800 method may involve the double periodic LR image render module 716 sampling sub-pixel regions of a low-resolution current frame according to a double period.

The double periodic LR image render module 716 may, for example, uniformly divide one pixel region 801 of a low-resolution current frame into pixel regions of a high-resolution image being upscaled; pixel region 803 is an example of one such pixel region. The double periodic LR image render module 716 may adjust a sampling position 805 of the low-resolution current frame to one pixel position (e.g., positions 1, 2, 3 and 4) of the high-resolution image and perform periodic sampling on each sub-pixel region of the current frame at regular periods to generate low-resolution partial images. In this example, one pixel region of the low-resolution current frame may be proportional to a scaling factor of one pixel region of the high-resolution image.

The double periodic LR image render module 716 may perform the first sampling on each of the sub-pixel regions once at a regular period (e.g., a period t1). The double periodic LR image render module 716 may perform the second sampling according to an arbitrary sequence at the second regular period different from the regular period on each of the sub-pixel regions in which the first sampling is performed.

For example, when the double periodic LR image render module 716 performs the first sampling on one sub-pixel region (a) per period t1, it may perform the second sampling within the sub-pixel region (a) in an arbitrary sequence (e.g., positions 5, 6, 7, and 8 -> positions 9, 10, 11, and 12 -> positions 13, 14, 15, and 16) according to another period t2. Accordingly, an entire sampling period corresponding to each of the sub-pixel regions may be t1 + t2.

When the double periodic LR image render module 716 performs the second sampling according to the period t2, for example, the sub-pixel region (a) may be second-sampled using a known low-discrepancy sequence such as a Hammersley sequence or a Halton sequence. The low-discrepancy sequence may be a sequence having a small discrepancy measure up to the N-th term of the sequence.

The Halton sequence may correspond to a sequence used to generate points in space for a numerical scheme such as a Monte Carlo simulation. While the Halton sequence is deterministic, computationally fast, and easy to implement, it may correspond to a sequence of points within a unit nn-cube with low discrepancy. The Hammersley sequence is identical to the Halton sequence except that it is in the first dimension where the points are equidistant from each other.

The double periodic LR image render module 716 may use the Hammersley sequence or Halton sequence for each sub-pixel region instead of the entire low-resolution current frame during the second sampling, so that sampling is not biased to one sub-pixel region.

In addition, the double periodic LR image render module 716 may perform the second sampling at the second regular period within the sub-pixel region in which the first sampling is performed, so that the replace module 750 may replace a partial region of a high-resolution image of the previous frame warped by the backward warping module 730 with low-resolution partial images according to a regular period (e.g., a period t1) during which the first sampling is performed.

FIG. 9 illustrates an example configuration and operation of a supersampling apparatus 900 that performs masking using a disocclusion map. As shown in FIG. 9, the supersampling apparatus 900 may include a disocclusion map module 915 and a disocclusion masking module 940.

Operations of a renderer 910, a motion vector render module 913, a periodic LR image render module 917, a backward warping module 930, a replace module 950, and a neural network 970 of the supersampling apparatus 900 may be as described above with reference to the renderer 210, the motion vector render module 213, the periodic LR image render module 216, the backward warping module 230, the replace module 250, and the neural network 270 of FIG. 2. Also, the operation of an upscale motion vector module 920 may be as described with reference to the upscale motion vector module 610 of FIG. 6. Accordingly, hereinafter, operations of the supersampling apparatus 900 as they differ from the operations of the supersampling apparatuses 200 and 600 are mainly described next.

As described above, disocclusion may be when an object or background that was not visible in a previous frame becomes visible in a current frame (or such a region), for example, due to the movement of the object or the movement of the camera.

The disocclusion map module 915 may compare the previous frame with the current frame and generate a disocclusion map in which different values are determined for each region of the current frame according to whether an object or background that was not visible in the previous frame is visible in the current frame as a result of the comparison, meaning whether or not there is a disocclusion region in the current frame.

Whether an object or background that was not visible in the previous frame is visible in the current frame may be determined using, for example, a motion vector and depth maps of the previous frame and the current frame. The depth map, which is a map of depth values corresponding to the pixels of a low-resolution image, may be generated by the renderer 210.

When the depth map of the previous frame is warped to the current frame using the motion vector map, the depth value of a region corresponding to the disocclusion region in the depth map of the previous frame (that is warped) may remain. This is the same as a disocclusion region remaining in an image. The disocclusion region may correspond to an emerging region in which an object or background that was not visible in the previous frame becomes visible in the current frame. Therefore, a visible region in the current frame may be a region in which an object covered in the previous frame is visible due to the movement of the object or the camera, and in terms of the depth map, may be a region in which the depth value increases. Accordingly, a ratio or difference between the depth map of the current frame and the warped depth map of the previous frame may occur. In this case, the disocclusion region may be identified by masking based on the ratio or difference between the depth map of the current frame and the warped depth map of the previous frame according to an arbitrary threshold.

Alternatively, the disocclusion region may be identified using a global ID map generated by the renderer 210 in lieu of the depth map in the above-described process. The global ID map may be an image-sized map that uniquely expresses an ID of an object corresponding to each pixel of the image.

The disocclusion map module 915 may determine, for example, a first value (e.g., "1") corresponding to a first region ("disocclusion region") of the current frame in which an object or background that was not visible in the previous frame has become visible in the current frame. In addition, the disocclusion map module 915 may determine a second value (e.g., "0") corresponding to a second region ("a region other than the disocclusion region") of the current frame in which an object or background visible in the previous frame is also visible in the current frame to generate a disocclusion map. The disocclusion map may include a first value (e.g., "1") assigned to disocclusion regions in the current frame, and a second value (e.g., "0") assigned to non-disocclusion regions.

The disocclusion masking module 940 may mask a high-resolution image of the previous frame (which has warped by the backward warping module 930) using the disocclusion map generated by the disocclusion map module 915.

The disocclusion masking module 940 may match the disocclusion map to the high-resolution image of the previous frame (warped by the backward warping module 930) using motion vectors of the motion vector map. The disocclusion masking module 940 may mask (i) a region corresponding to a region in the disocclusion map having the first value ("1") that is (ii) in the high-resolution image of the previous frame, and may (iii) mask that region with a pixel value of "0". In addition, the disocclusion masking module 940 may mask (i) a region corresponding to a region in the disocclusion map having the second value ("0") that is (ii) in the high-resolution image of the previous frame, and may (iii) mask that region with the original pixel value of the previous frame.

The disocclusion masking module 940 may transmit, to the replace module 950, the high-resolution image of the previous frame masked in a color (e.g., black) corresponding to a pixel value of "0" (corresponding to the disocclusion region in the high-resolution image of the previous frame that has been warped by the backward warping module 930).

The replace module 950 may replace a partial region of the high-resolution image of the previous frame in which the disocclusion region is masked in black with a low-resolution partial image generated by the periodic LR image render module 917.

Here, the region masked by the disocclusion map in the high-resolution image of the previous frame is a black region with a pixel value of "0", but since a partial region is replaced with a low-resolution partial image by the replace module 950, image information (e.g., color information of the low-resolution image) may be included. The replace module 950 may obtain a high-resolution image of the current frame by applying the high-resolution image of the previous frame (in which a partial region has replaced with the low-resolution partial image) to the neural network 970.

In an example, after erasing the information of the disocclusion region (which may cause artifacts during supersampling) in the high-resolution image of the previous frame through the above-described process with the pixel value "0" (black), the generation of artifacts due to disocclusion may be reduced by applying the high-resolution image of the previous frame (including only information of the low-resolution partial image) to the neural network 970.

FIG. 10 illustrates an example supersampling method. Operations to be described hereinafter may be performed sequentially, but not sequentially. For example, the order of the operations may be changed and at least two of the operations may be performed in parallel.

Referring to FIG. 10, a supersampling apparatus may obtain a high-resolution image of a current frame through operations 1010 to 1050.

In operation 1010, the supersampling apparatus may receive a low-resolution 3D image including a current frame and one or more previous frames preceding the current frame. For example, when the current frame is an image frame corresponding to time t, the one or more previous frames may be an image frame corresponding to time t-1 or times t-1 and t-2, respectively. The 3D image may be, for example, a scene of a game, a scene of a movie, and/or a 3D scene (e.g., a navigation scene) provided by various visualization functions of an automobile infotainment system, but is not limited thereto.

The supersampling apparatus may obtain information on any one or any combination of a 3D image (or 3D scene), along with, for example, a camera capturing the 3D image, at least one object included in the 3D scene, polygons constituting the at least one object, and vertexes and edges of the polygons. The information on the camera capturing the 3D image may include, for example, a focal length of the camera, a viewing angle of the camera, and pixel information of the camera, but is not limited thereto.

In operation 1020, the supersampling apparatus may generate a low-resolution partial image by sampling sub-pixel regions of the current frame at regular periods. The supersampling apparatus may generate a low-resolution partial image via, for example, the periodic LR image render module 216 described above.

In operation 1030, the supersampling apparatus may warp a high-resolution image of the previous frame (previously outputted from a neural network) to a current view corresponding to the current frame. The supersampling apparatus may warp the high-resolution image of the previous frame to a current view (corresponding to the current frame) by the backward warping modules 230, 730, and 930.

In operation 1040, the supersampling apparatus may replace a partial region of the high-resolution image of the previous frame warped in operation 1030 with image data from the low-resolution partial image generated in operation 1020. The supersampling apparatus may replace the partial region of the high-resolution image with a partial image of low-resolution by, for example, the above-described replace modules 250, 750, and 950.

In operation 1050, the supersampling apparatus may obtain a high-resolution image of the current frame by applying the high-resolution image of the previous frame (in which the partial region has replaced in operation 1040) to the neural network. The neural network may be, for example, the aforementioned neural networks 270, 770, and 970, but is not limited thereto.

FIG. 11 illustrates an example supersampling method. Operations to be described hereinafter may be performed sequentially, but not sequentially. For example, the order of the operations may be changed and at least two of the operations may be performed in parallel.

Referring to FIG. 11, a supersampling apparatus may infer a high-resolution image of a current frame through operations 1110 to 1150.

In operation 1110, the supersampling apparatus may periodically render a low-resolution current frame. When a low-resolution 3D image (including a current frame and one or more previous frames preceding the current frame) is input, the supersampling apparatus may periodically render the low-resolution current frame using the renderers 210, 710, and 910 described above.

In operation 1120, the supersampling device may render a motion vector (or vector map) of low resolution and a corresponding motion vector (or vector map) up-scaled to high resolution. The supersampling apparatus may generate a low-resolution motion vector map including motion vectors via the motion vector render modules 213, 713, and 913 described above. The supersampling apparatus may up-scale the low-resolution motion vector map to a high-resolution motion vector map via the upscale motion vector module 610.

In operation 1130, the supersampling apparatus may backward-warp a high-resolution image of a previous frame output from a neural network to a current view via the backward warping modules 230, 730, and 930 using the high-resolution motion vector map up-scaled in operation 1120.

In operation 1140, the supersampling apparatus may replace a partial region of the high-resolution image of the previous frame (which has been backward-warped in operation 1130) with a low-resolution partial image via the above-described replace modules 250, 750, and 950.

In operation 1150, the supersampling apparatus may infer a high-resolution image of the current frame via the neural networks 270, 770, and 970 performing neural supersampling.

FIG. 12 illustrates an example supersampling method. Operations to be described hereinafter may be performed sequentially, but not sequentially. For example, the order of the operations may be changed and at least two of the operations may be performed in parallel.

Referring to FIG. 12, a supersampling apparatus may obtain a high-resolution image of a current frame through operations 1210 to 1280.

In operation 1210, the supersampling apparatus may receive a low-resolution 3D image including a current frame and one or more previous frames preceding the current frame.

In operation 1220, the supersampling apparatus may determine sub-pixel regions in which each low-resolution pixel region of the current frame is divided into one high-resolution pixel regions to be up-scaled.

In operation 1230, the supersampling apparatus may perform a first sampling on each of the sub-pixel regions determined in operation 1220 at regular periods.

In operation 1240, the supersampling apparatus may perform a second sampling according to an arbitrary sequence at a second regular period different from the regular period within the sub-pixel region in which the first sampling is performed.

In operation 1250, the supersampling apparatus may generate a low-resolution partial image corresponding to each of the sub-pixel regions based on the first sampling and the second sampling.

The operations of operations 1220 to 1250 may be performed by, for example, the double periodic LR image render module 716 described above.

In operation 1260, the supersampling apparatus may warp a high-resolution image of the previous frame (outputted from a neural network) to a current view corresponding to the current frame.

In operation 1270, the supersampling apparatus may replace a partial region of the high-resolution image of the previous frame (which has been warped in operation 1260) with image data from the low-resolution partial image generated in operation 1250.

In operation 1280, the supersampling apparatus may obtain a high-resolution image of the current frame by applying the warped high-resolution image of the previous frame in which the partial region is replaced in operation 1270 to the neural network.

FIG. 13 illustrates an example of a supersampling method. Operations to be described hereinafter may be performed sequentially, but not sequentially. For example, the order of the operations may be changed and at least two of the operations may be performed in parallel.

Referring to FIG. 13, a supersampling apparatus may acquire a high-resolution image of a current frame through operations 1310 to 1380.

In operation 1310, the supersampling apparatus may receive a low-resolution 3D image including a current frame and one or more previous frames preceding the current frame.

In operation 1320, the supersampling apparatus may generate a low-resolution partial image by sampling sub-pixel regions obtained by dividing a pixel region of the current frame based on the high resolution to be up-scaled at regular periods via the periodic LR image render modules 216 and 917.

In operation 1330, the supersampling apparatus may warp a high-resolution image of the previous frame output from a neural network to a current view corresponding to the current frame via the backward warping modules 230 and 930.

In operation 1340, the supersampling apparatus may compare the previous frame and the current frame.

In operation 1350, the supersampling apparatus may generate a disocclusion map in which different values are determined for each region of the current frame according to whether an object or background that was not visible in the previous frame is visible in the current frame as a result of the comparison in operation 1340. Operations 1340 and 1350 may be performed by the disocclusion map module 915 described above.

In operation 1360, the supersampling apparatus may mask the high-resolution image of the previous frame warped to the current view in operation 1330 using the disocclusion map generated in operation 1350. The supersampling apparatus may mask the high-resolution image of the previous frame warped to the current view by the aforementioned disocclusion masking module 940 with the disocclusion map.

In operation 1370, the supersampling apparatus may replace, via the replace module 950, a partial region of the warped high-resolution image of the previous frame that is masked by the disocclusion map in operation 1360 with the low-resolution partial image generated in operation 1320.

In operation 1380, the supersampling apparatus may obtain a high-resolution image of the current frame by applying the warped high-resolution image of the previous frame in which the partial region is replaced in operation 1370 to the neural network.

The computing apparatuses, the electronic devices, the processors, the memories, the displays, the information output system and hardware, the storage devices, and other apparatuses, devices, units, modules, and components described herein with respect to FIGS. 1-13 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-13 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the appended claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components.

Therefore, in addition to the above disclosure, the scope of the disclosure may also be defined by the appended claims, and all variations within the scope of the appended claims are to be construed as being included in the disclosure.

## Claims

**1.** A supersampling method, the method comprising:

receiving a low-resolution three-dimensional, '3D', image comprising a current frame and a previous frame preceding the current frame;
generating a low-resolution partial image by repeatedly sampling sub-pixel regions of the current frame;
warping a high-resolution image of the previous frame, which has been outputted from a neural network, to a current view corresponding to the current frame;
replacing a partial region of the warped high-resolution image of the previous frame with image data from the low-resolution partial image; and
generating a high-resolution image of the current frame by applying the high-resolution image of the previous frame, in which the partial region has been replaced, to the neural network.

**2.** The method of claim 1, wherein the generating of the low-resolution partial image comprises:

determining sub-pixel regions of a pixel region of the current frame by dividing the pixel region into a high-resolution pixel region that is to be up-scaled; and
generating a low-resolution partial image corresponding to each of the sub-pixel regions by sampling each of the sub-pixel regions at regular periods.

**3.** The method of claim 1, wherein the generating of the low-resolution partial image comprises:

determining sub-pixel regions of a pixel region of the current frame by dividing the pixel region into the a high-resolution pixel region that is to be up-scaled;
at a first time, performing a first sampling at first sample points in the respective sub-pixel regions of the pixel region;
at a second time, performing a second sampling at second sample points in the respective sub-pixel regions of the pixel region; and
generating the low-resolution partial image according to the first sampling and generating a second low-resolution partial image according to the second sampling.

**4.** The method of any of the previous claims, wherein the replacing is based on a disocclusion map.

**5.** The method of any of the previous claims, wherein the replacing comprises:

dividing the warped high-resolution image of the previous frame into a set of low-resolution partial images of respectively corresponding channels; and
replacing the divided partial images with the generated low-resolution partial image.

**6.** The method of any of the previous claims, wherein the warping is based on a low-resolution motion vector map corresponding to the current frame and the previous frame,
wherein the low-resolution motion vector map preferably indicates movement relationships between first pixels of the current frame and second pixels of the previous frame, and wherein the method preferably further comprises generating the low-resolution motion vector map by rendering the low-resolution 3D image.

7. The method of claim 6, further comprising up-scaling the low-resolution motion vector map to a high-resolution scaled motion vector map,
wherein the up-scaling is preferably performed using an upscaling filter comprising a nearest neighborhood filter, a bilinear filter, or a bicubic filter.

8. The method of claim 7, wherein the warping comprises warping the high-resolution image of the previous frame output from the neural network to the current view based on the high-resolution scaled motion vector map.

9. The method of any of the previous claims, further comprising:

comparing the previous frame with the current frame; and
based on the comparing, generating a disocclusion map that identifies disocclusion regions of the current frame that were not visible in the previous frame and that are visible in the current frame,
wherein, preferably, the disocclusion regions are identified by instances of a first value in the disocclusion map and non-disocclusion regions are identified by instances of a second value in the disocclusion map.

10. The method of claim 9, further comprising masking the warped high-resolution image of the previous frame using the disocclusion map,
wherein the masking preferably comprises applying the disocclusion map to the warped high-resolution image of the previous frame such that:

a region of the warped high-resolution image corresponding to a disocclusion region of the disocclusion map is cleared; and
a region of the warped high-resolution image corresponding to a non-occlusion region of the disocclusion map retains its original pixel values.

11. The method of claim 9 or 10, wherein the replacing comprises replacing a partial region of the high-resolution image of the previous frame masked by the disocclusion map with image data from the low-resolution partial image.

12. The method of any of the previous claims, wherein the neural network has an input resolution and an output resolution that are the same.

13. A non-transitory computer-readable storage medium storing instructions that, when executed by a processor, cause the processor to perform the method of any of the previous claims.

14. A supersampling apparatus, the apparatus comprising:

a storage storing a low-resolution three-dimensional, '3D', image comprising a current frame and a previous frame preceding the current frame; and
one or more processors configured to:

generate a low-resolution image by sampling the current frame;
warp a high-resolution image of the previous frame outputted from a neural network to a current view corresponding to the current frame;
replace a partial region of the warped high-resolution image of the previous frame with image data from the low-resolution image; and
generate a high-resolution image of the current frame by applying the high-resolution image of the previous frame, in which the partial region has been replaced, to the neural network.

15. The apparatus of claim 14, wherein the processor is further configured to determine sub-pixel regions of the current frame by dividing a pixel region of the current frame into a high-resolution pixel region to be up-scaled and generate the low-resolution image by sampling each of the sub-pixel regions,
and/or
the apparatus further comprising a memory comprising the neural network, wherein the neural network has been trained to output the high-resolution image of the current frame in response to the high-resolution image of the previous frame being input.

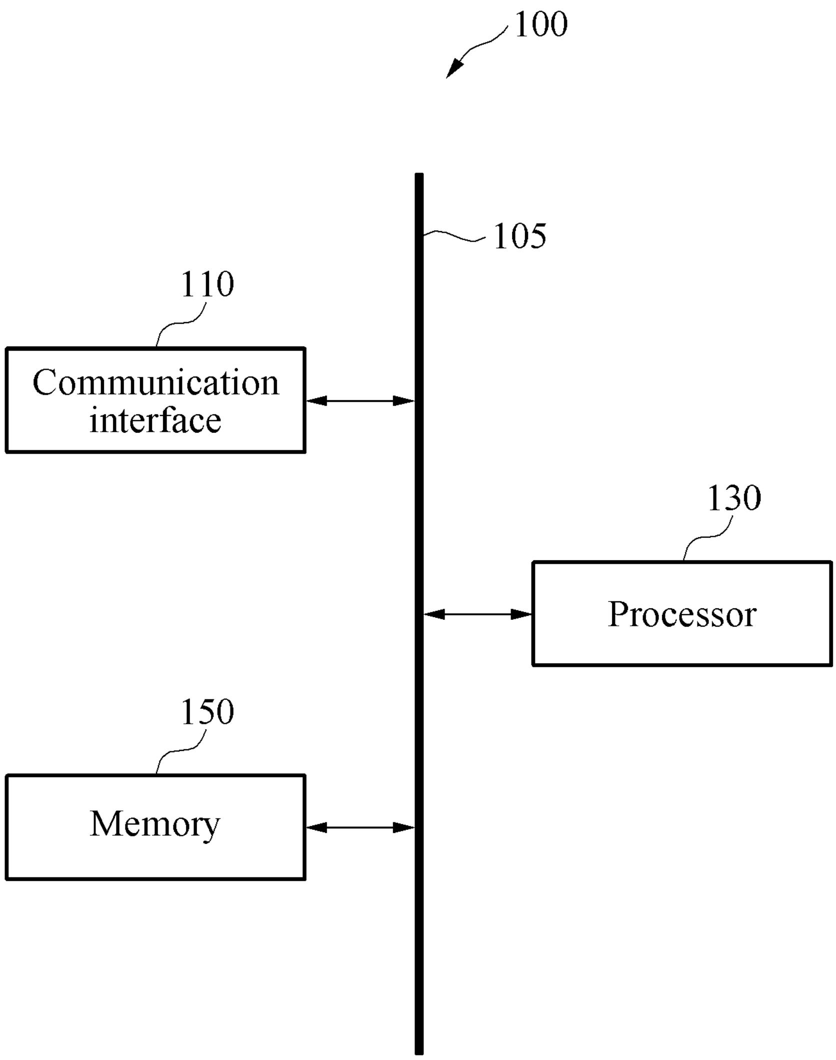
100
105
110
Communication interface
130
Processor
150
Memory

FIG. 1

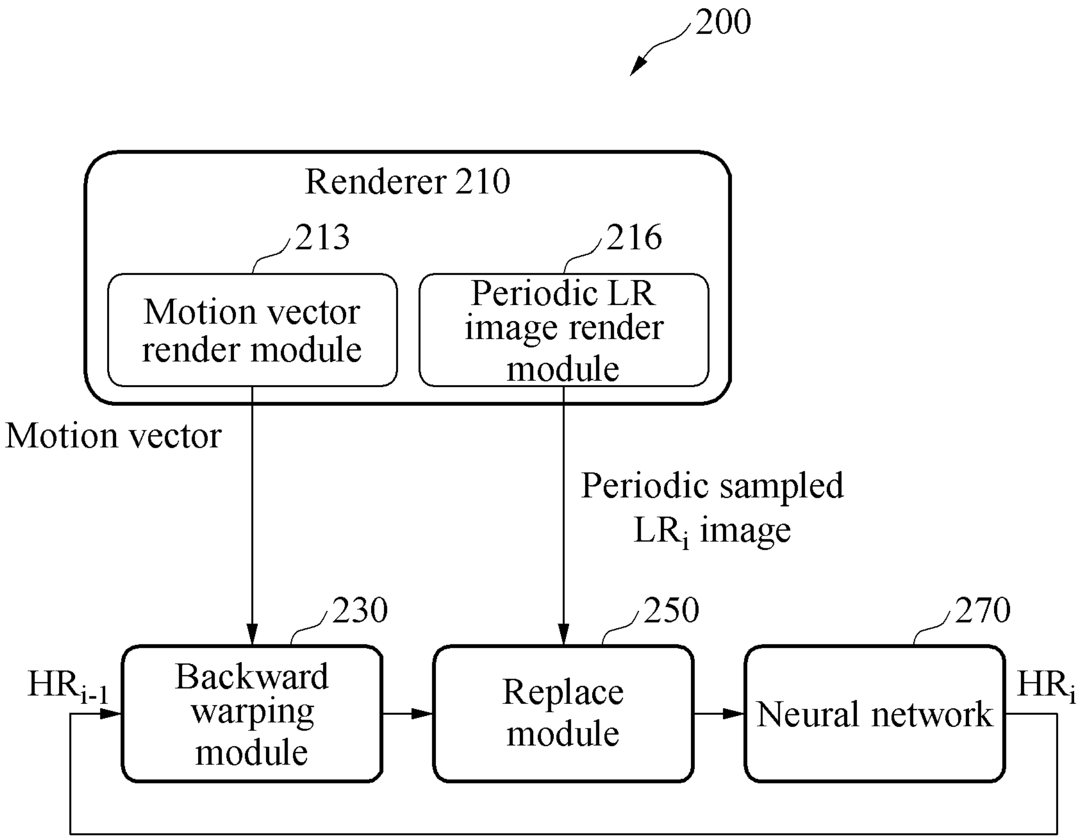
200
Renderer 210
213
216
Motion vector render module
Periodic LR image render module
Motion vector
Periodic sampled $LR_i$ image
230
250
270
$HR_{i-1}$
Backward warping module
Replace module
Neural network
$HR_i$

FIG. 2

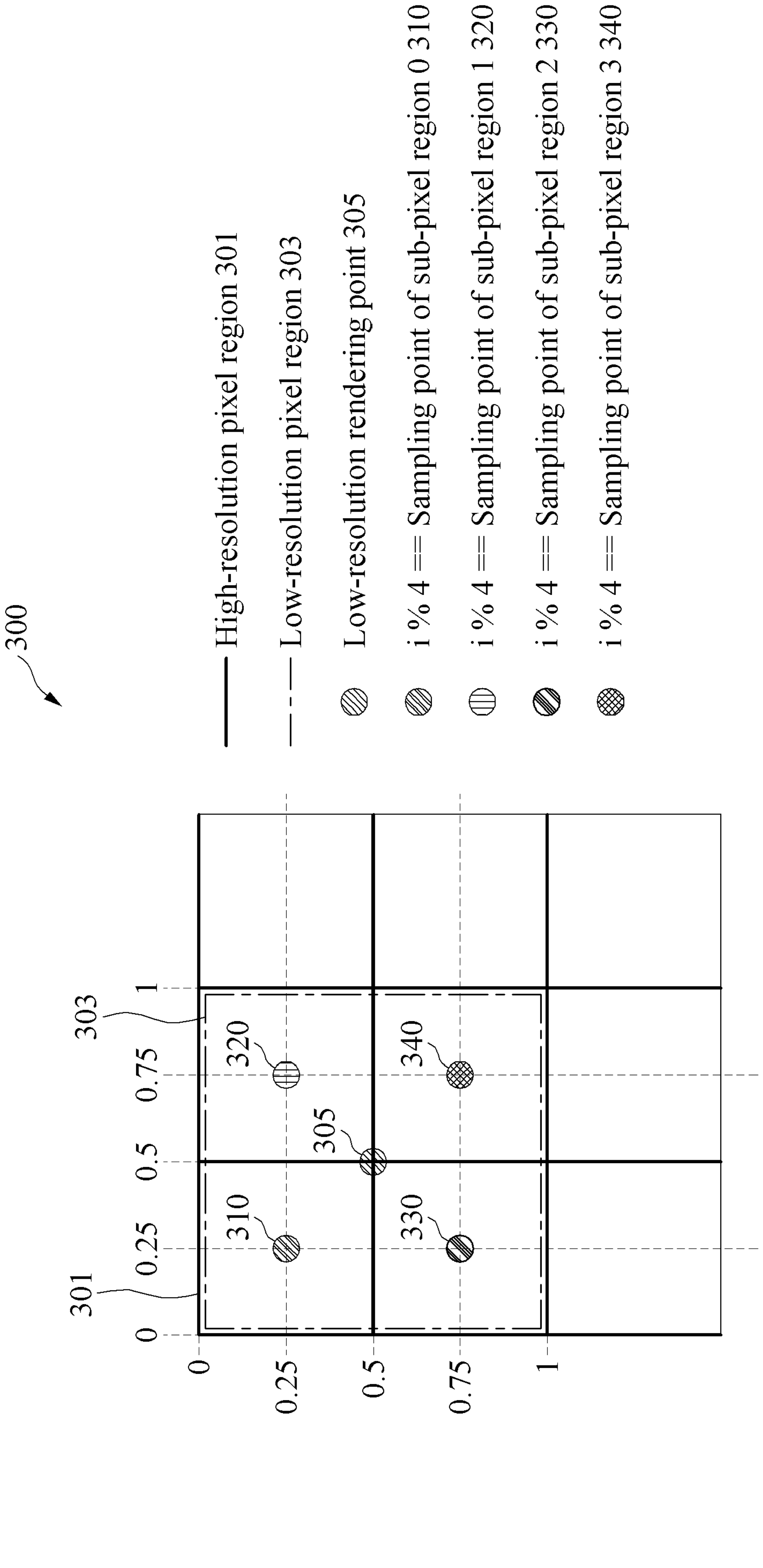
300
High-resolution pixel region 301
Low-resolution pixel region 303
Low-resolution rendering point 305
i % 4 == Sampling point of sub-pixel region 0 310
i % 4 == Sampling point of sub-pixel region 1 320
i % 4 == Sampling point of sub-pixel region 2 330
i % 4 == Sampling point of sub-pixel region 3 340
301
303
305
310
320
330
340
0
0.25
0.5
0.75
1

FIG. 3

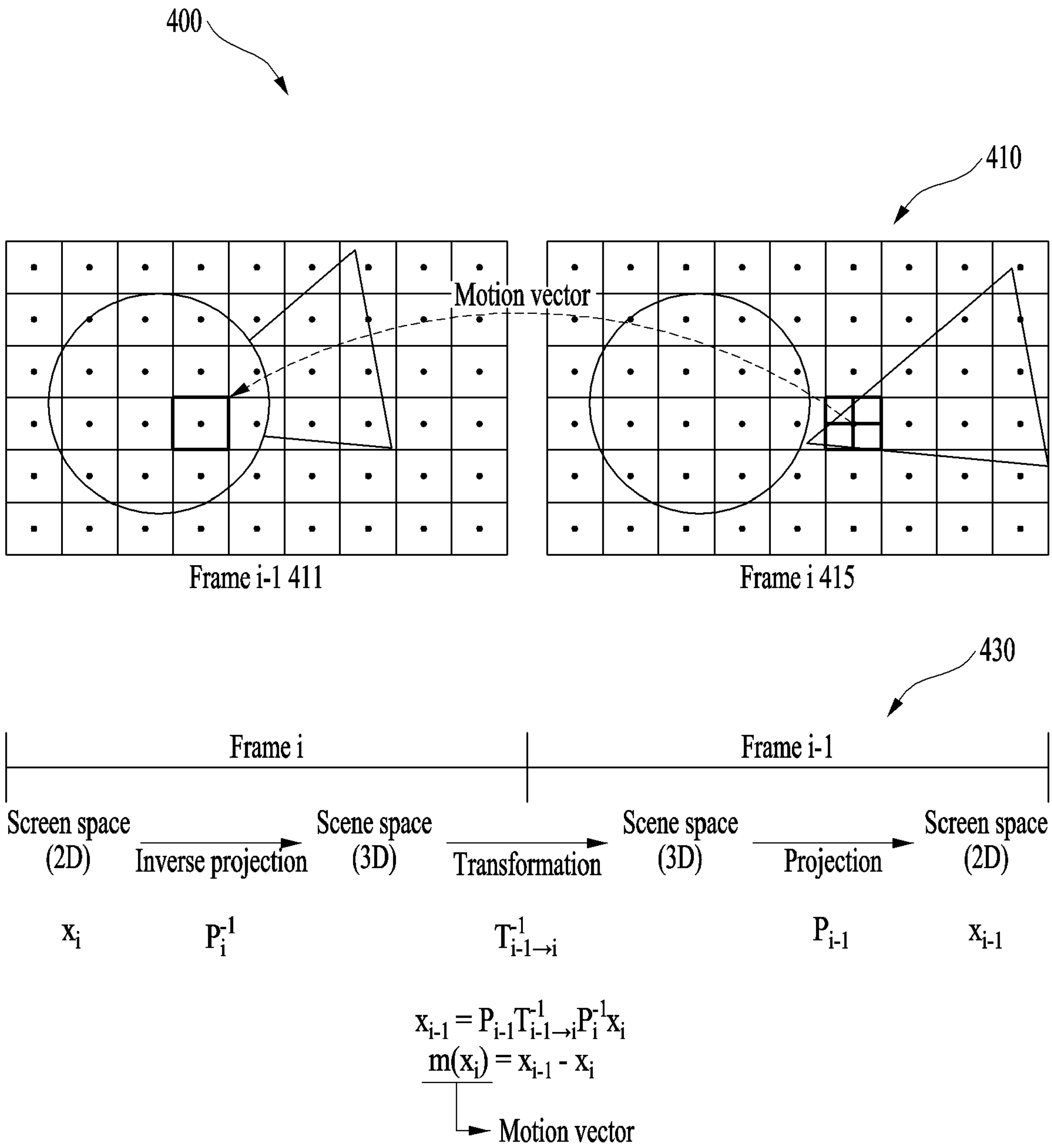
400
410
Motion vector
Frame i-1 411
Frame i 415
430
Frame i
Frame i-1
Screen space (2D)
Inverse projection
Scene space (3D)
Transformation
Scene space (3D)
Projection
Screen space (2D)
$x_i$
$P_i^{-1}$
$T_{i-1\rightarrow i}^{-1}$
$P_{i-1}$
$x_{i-1}$
$x_{i-1} = P_{i-1}T_{i-1\rightarrow i}^{-1}P_i^{-1}x_i$
$m(x_i) = x_{i-1} - x_i$
Motion vector

FIG. 4

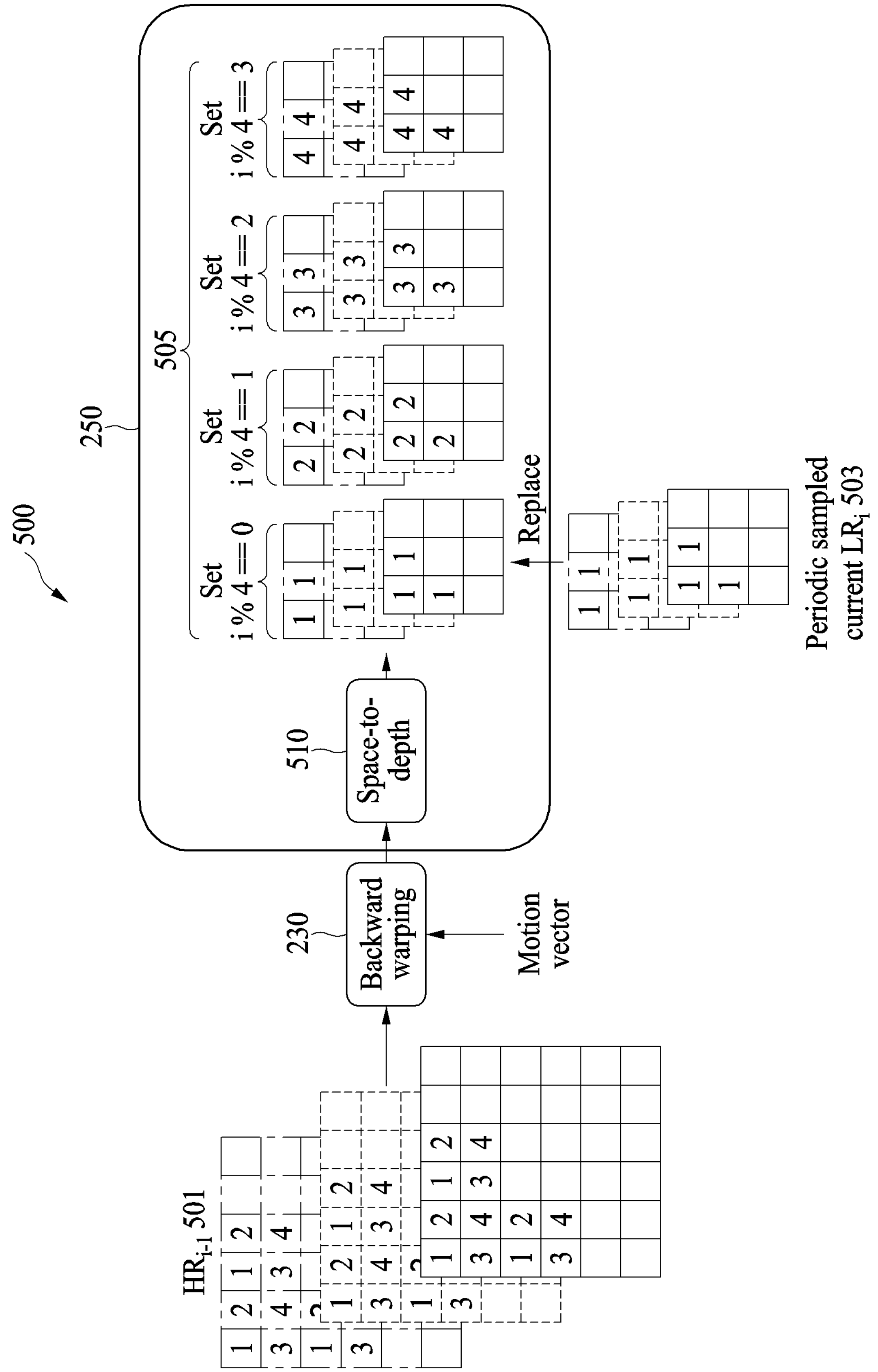
500
250
505
510
Space-to-depth
230
Backward warping
Motion vector
Set i % 4 == 0
Set i % 4 == 1
Set i % 4 == 2
Set i % 4 == 3
Replace
Periodic sampled current $LR_i$ 503
$HR_{i-1}$ 501

FIG. 5

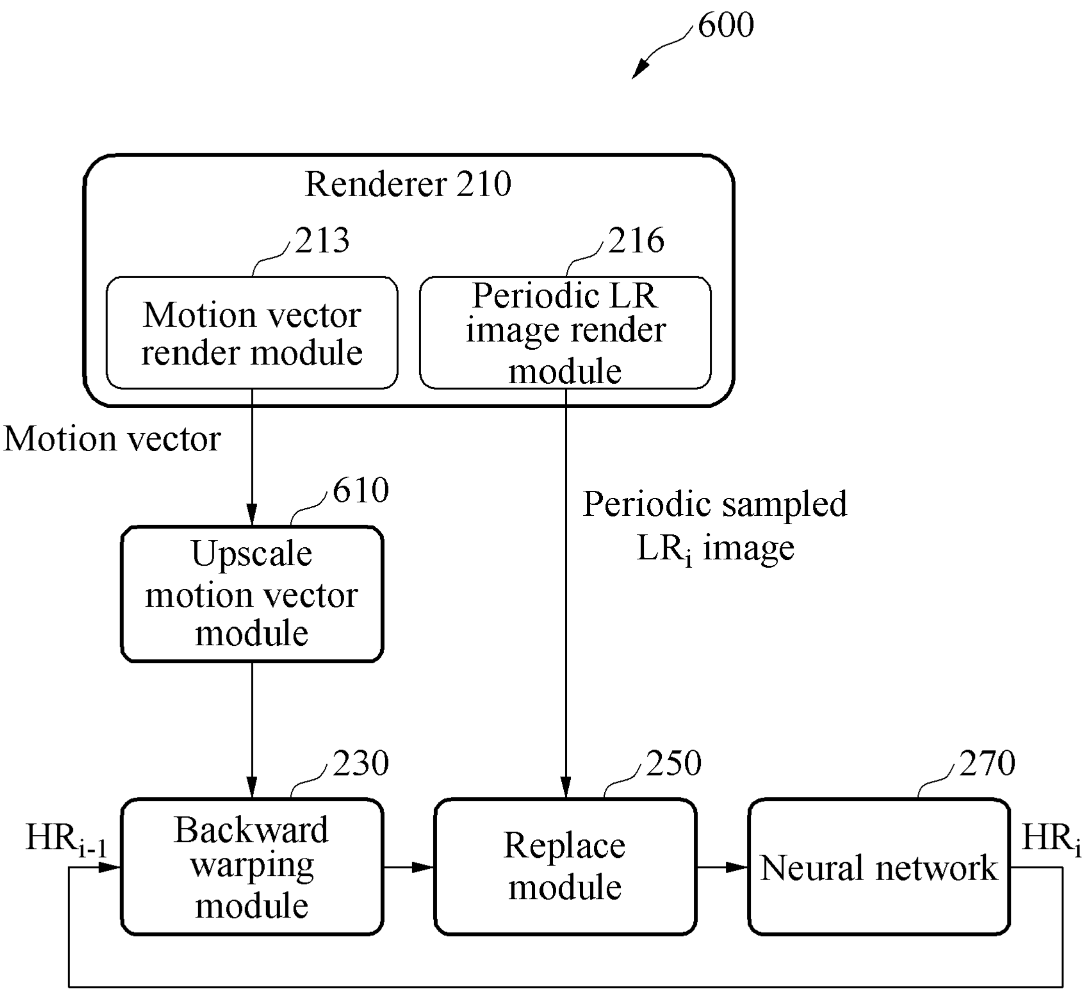
600
Renderer 210
213
Motion vector render module
216
Periodic LR image render module
Motion vector
610
Upscale motion vector module
Periodic sampled $LR_i$ image
230
Backward warping module
250
Replace module
270
Neural network
$HR_{i-1}$
$HR_i$

FIG. 6

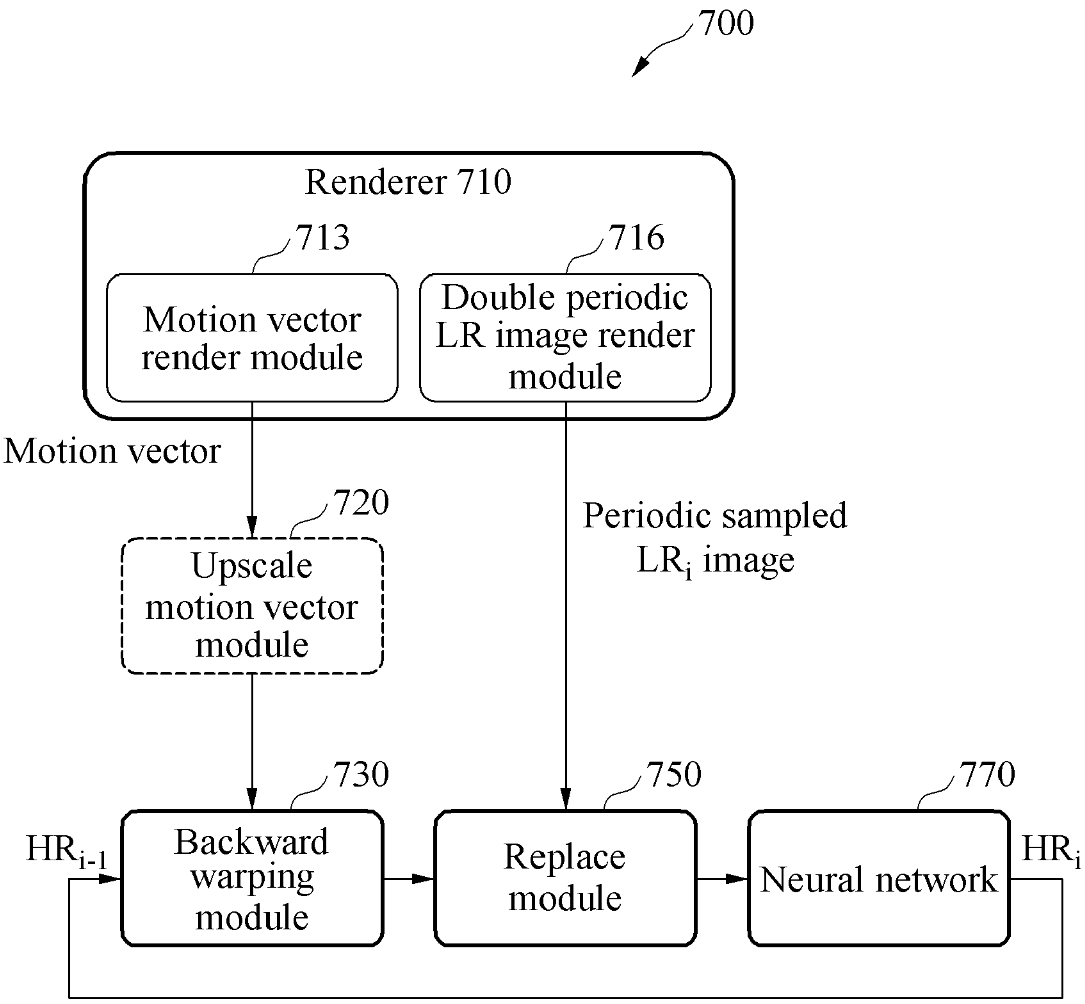
700
Renderer 710
713
Motion vector render module
716
Double periodic LR image render module
Motion vector
720
Upscale motion vector module
Periodic sampled $LR_i$ image
730
750
770
$HR_{i-1}$
Backward warping module
Replace module
Neural network
$HR_i$

FIG. 7

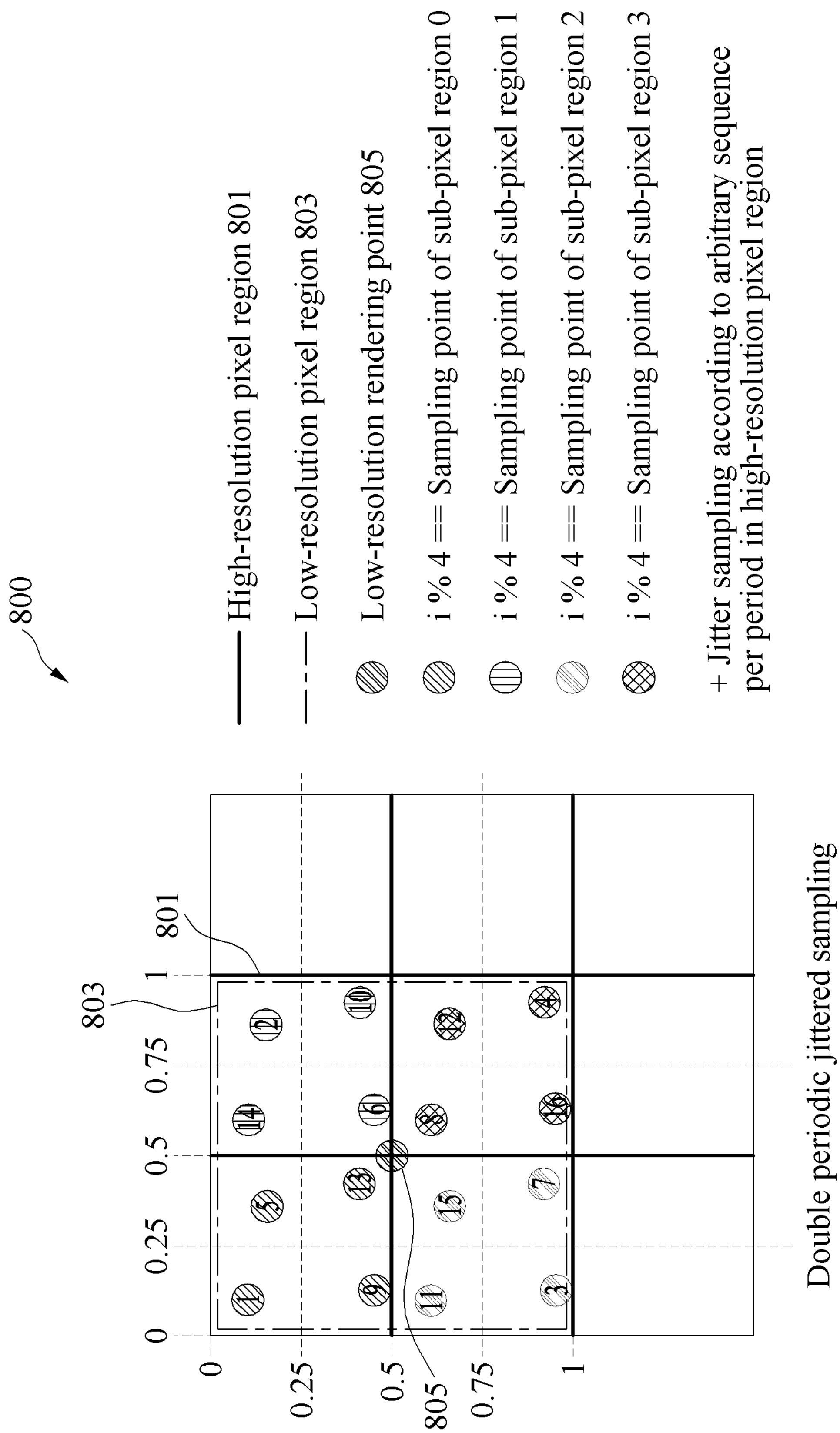
800
High-resolution pixel region 801
Low-resolution pixel region 803
Low-resolution rendering point 805
i % 4 == Sampling point of sub-pixel region 0
i % 4 == Sampling point of sub-pixel region 1
i % 4 == Sampling point of sub-pixel region 2
i % 4 == Sampling point of sub-pixel region 3
+ Jitter sampling according to arbitrary sequence per period in high-resolution pixel region
803
801
805
0
0.25
0.5
0.75
1
Double periodic jittered sampling

FIG. 8

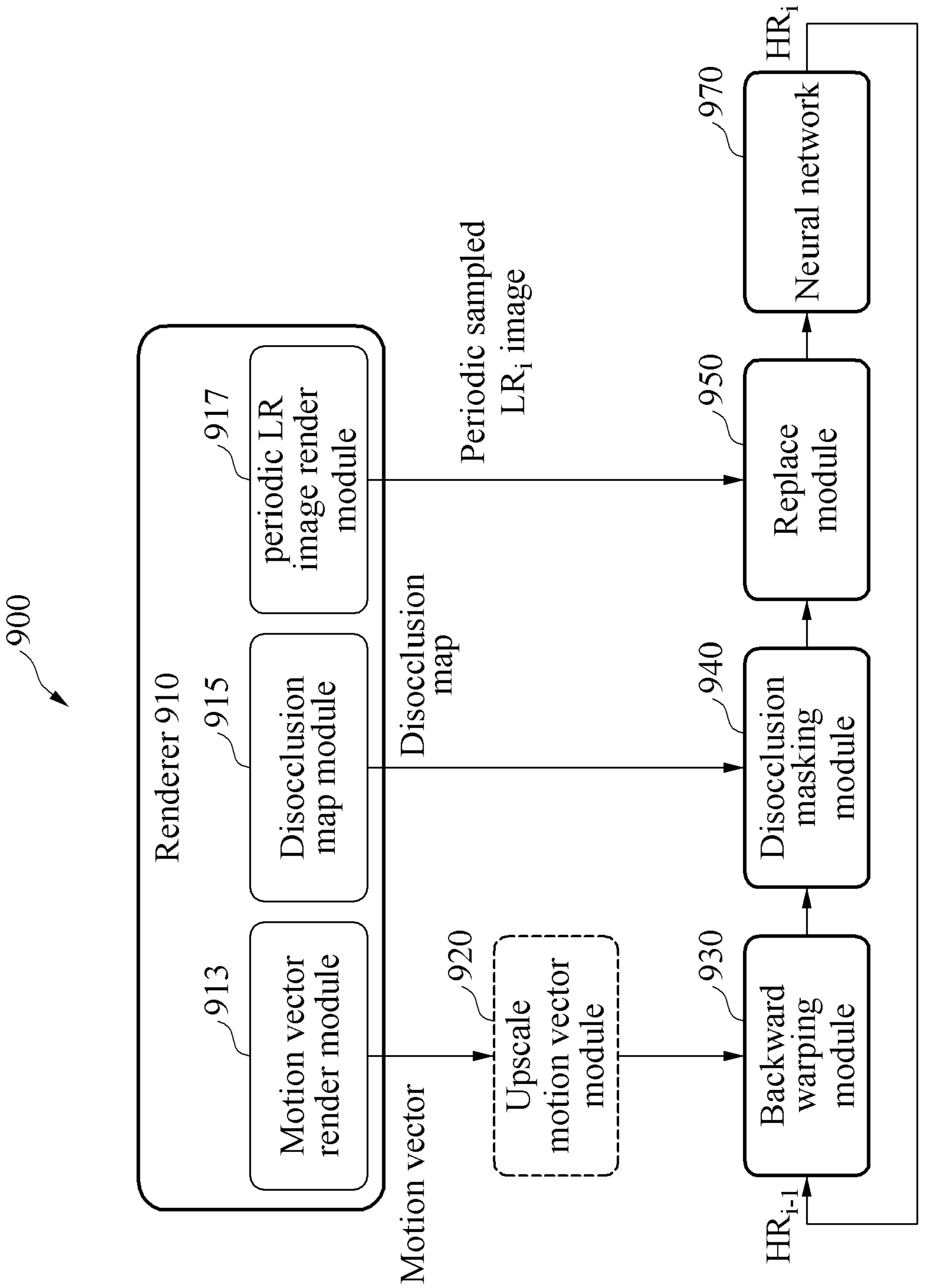
900
Renderer 910
913
Motion vector render module
915
Disocclusion map module
917
periodic LR image render module
Motion vector
920
Upscale motion vector module
Disocclusion map
Periodic sampled $LR_i$ image
930
Backward warping module
940
Disocclusion masking module
950
Replace module
970
Neural network
$HR_{i-1}$
$HR_i$

FIG. 9

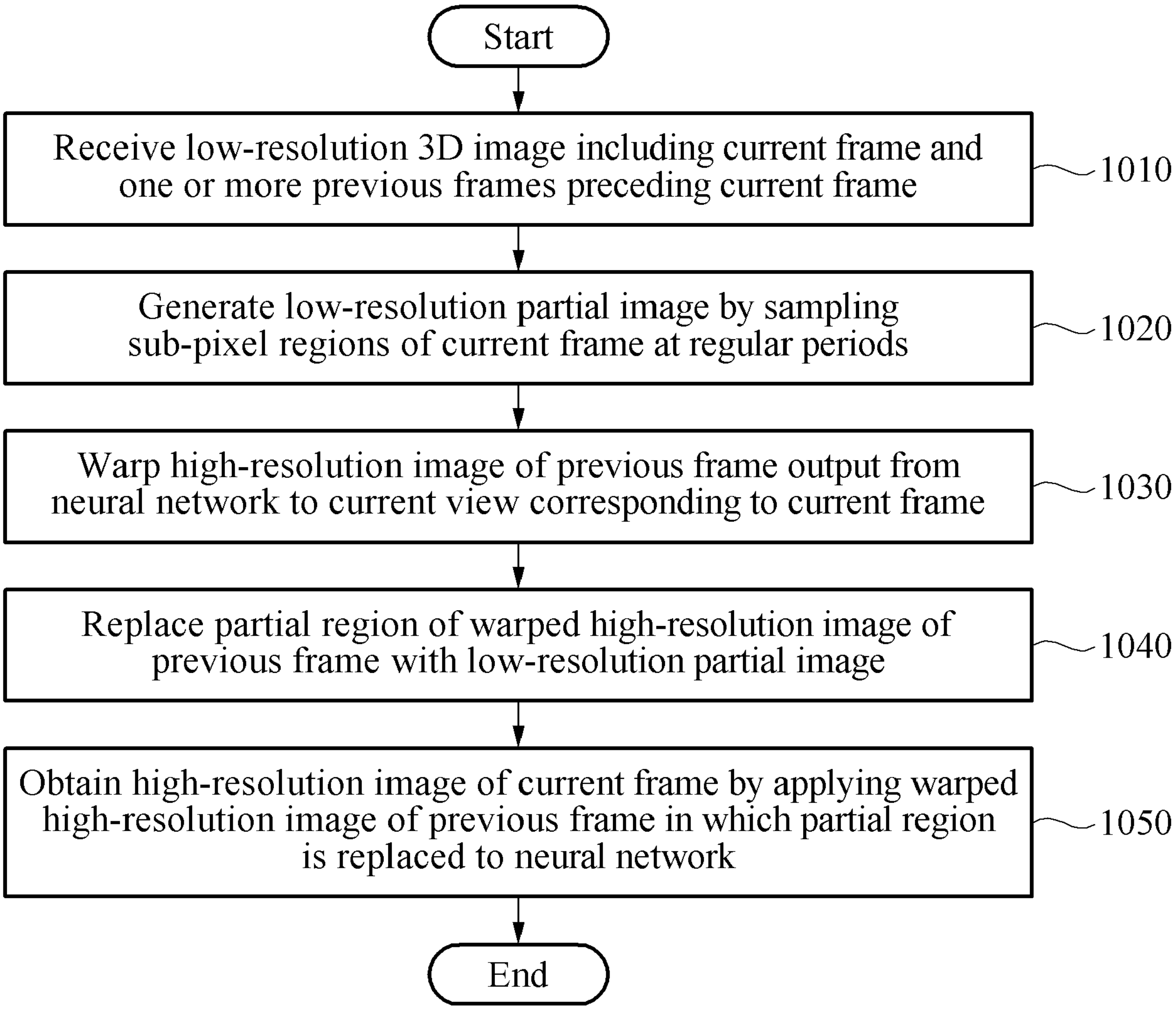
Start
Receive low-resolution 3D image including current frame and one or more previous frames preceding current frame
1010
Generate low-resolution partial image by sampling sub-pixel regions of current frame at regular periods
1020
Warp high-resolution image of previous frame output from neural network to current view corresponding to current frame
1030
Replace partial region of warped high-resolution image of previous frame with low-resolution partial image
1040
Obtain high-resolution image of current frame by applying warped high-resolution image of previous frame in which partial region is replaced to neural network
1050
End

FIG. 10

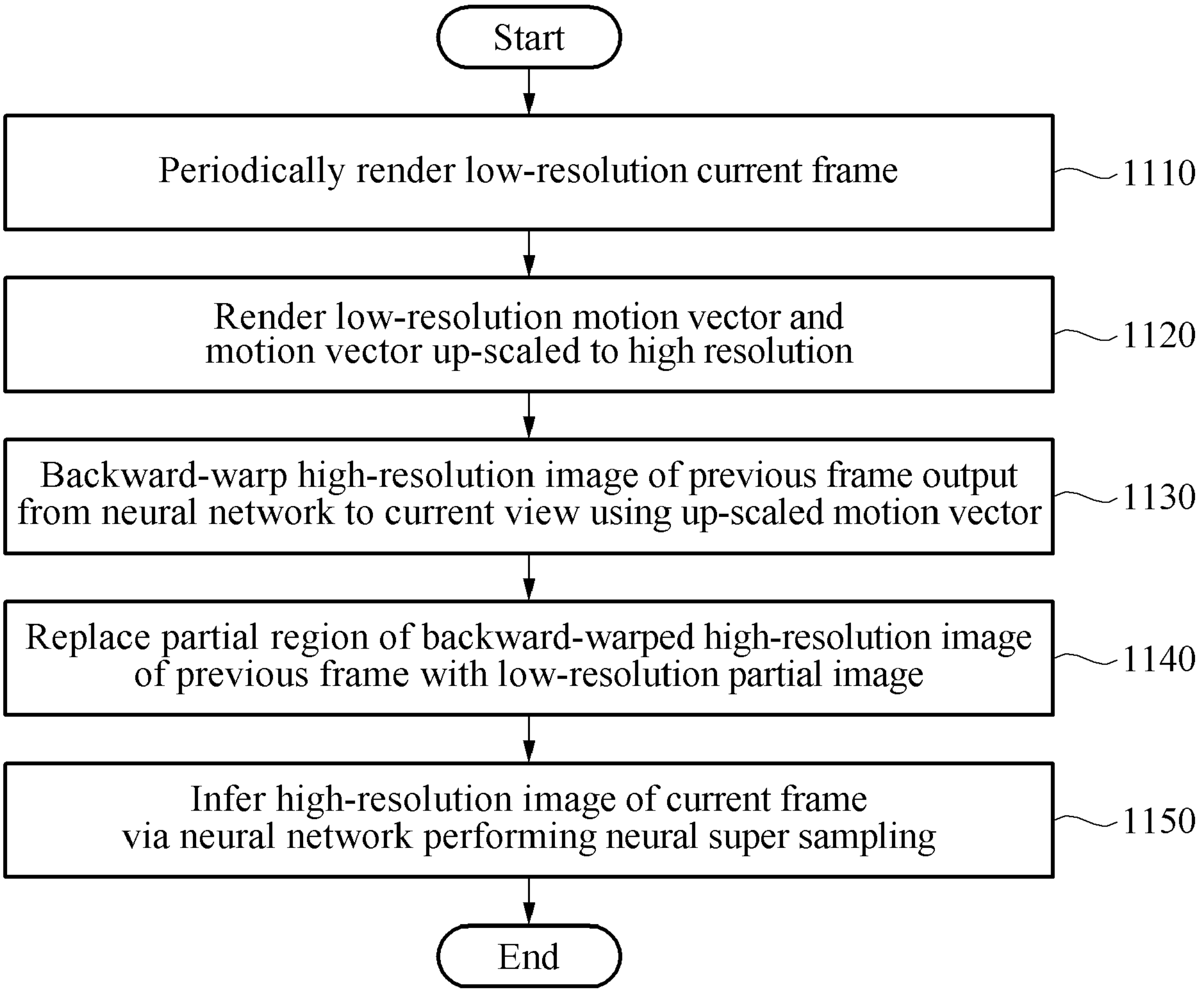
Start
Periodically render low-resolution current frame
1110
Render low-resolution motion vector and motion vector up-scaled to high resolution
1120
Backward-warp high-resolution image of previous frame output from neural network to current view using up-scaled motion vector
1130
Replace partial region of backward-warped high-resolution image of previous frame with low-resolution partial image
1140
Infer high-resolution image of current frame via neural network performing neural super sampling
1150
End

FIG. 11

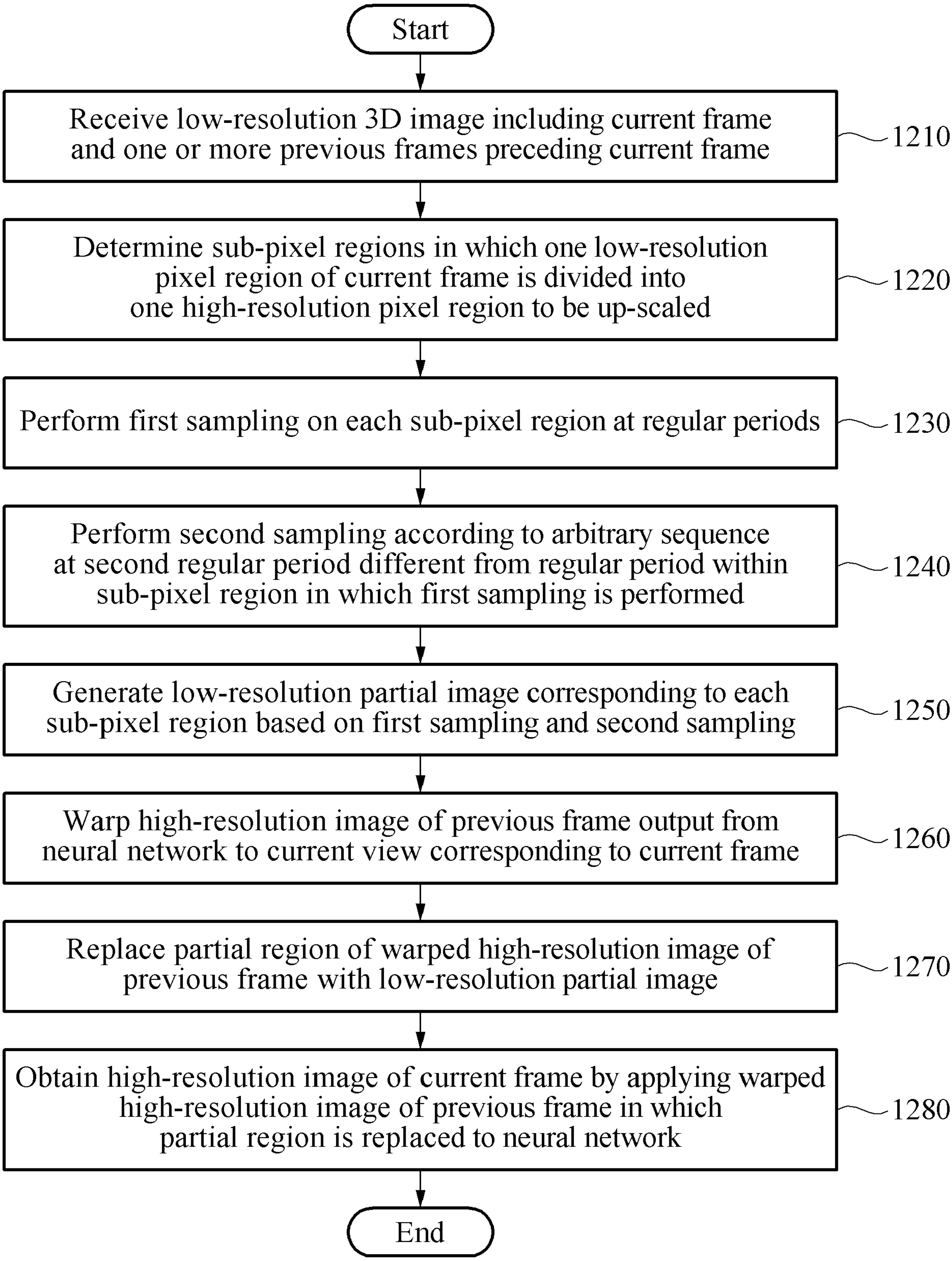
Start
Receive low-resolution 3D image including current frame and one or more previous frames preceding current frame
1210
Determine sub-pixel regions in which one low-resolution pixel region of current frame is divided into one high-resolution pixel region to be up-scaled
1220
Perform first sampling on each sub-pixel region at regular periods
1230
Perform second sampling according to arbitrary sequence at second regular period different from regular period within sub-pixel region in which first sampling is performed
1240
Generate low-resolution partial image corresponding to each sub-pixel region based on first sampling and second sampling
1250
Warp high-resolution image of previous frame output from neural network to current view corresponding to current frame
1260
Replace partial region of warped high-resolution image of previous frame with low-resolution partial image
1270
Obtain high-resolution image of current frame by applying warped high-resolution image of previous frame in which partial region is replaced to neural network
1280
End

FIG. 12

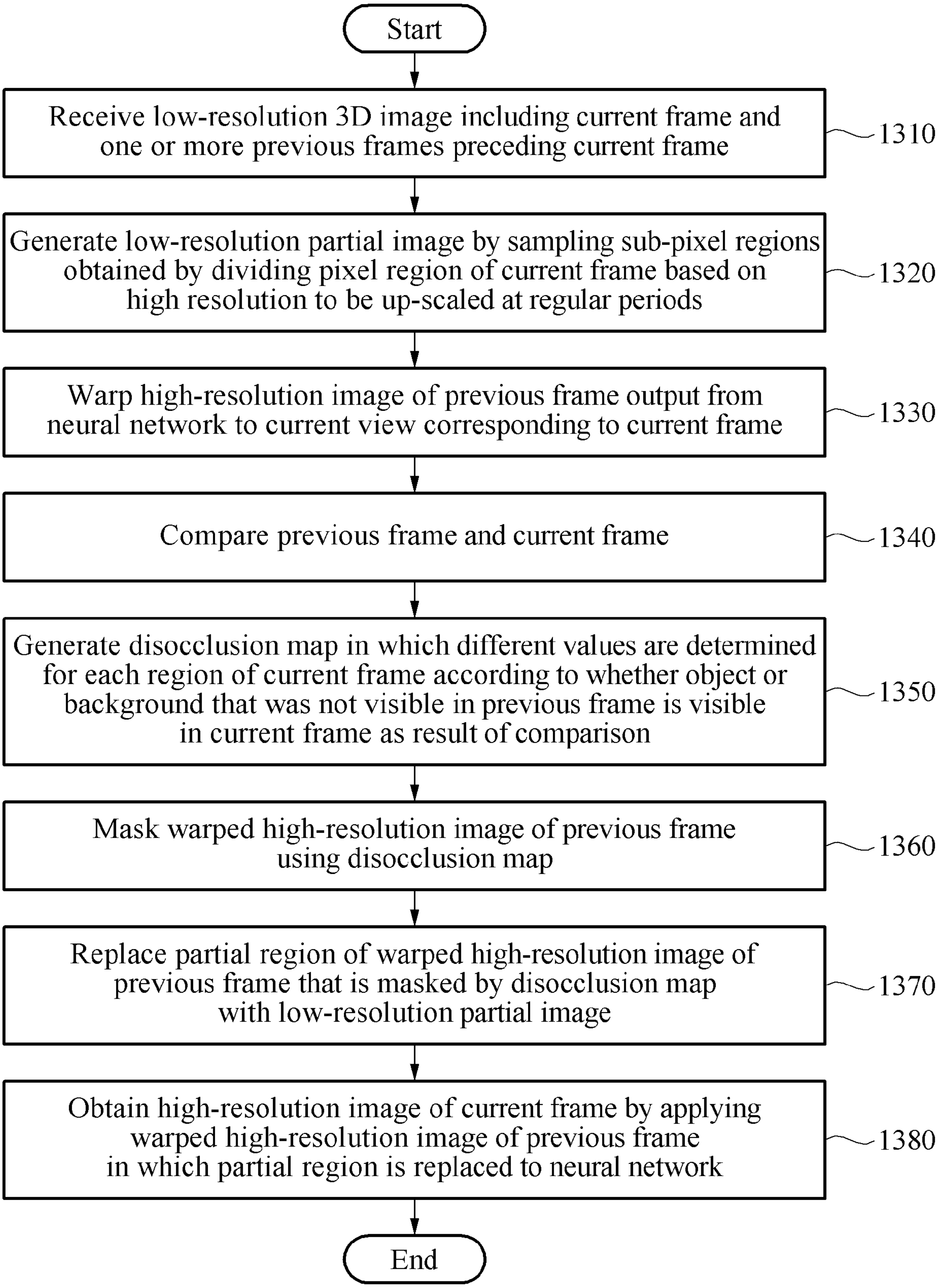
Start
Receive low-resolution 3D image including current frame and one or more previous frames preceding current frame
1310
Generate low-resolution partial image by sampling sub-pixel regions obtained by dividing pixel region of current frame based on high resolution to be up-scaled at regular periods
1320
Warp high-resolution image of previous frame output from neural network to current view corresponding to current frame
1330
Compare previous frame and current frame
1340
Generate disocclusion map in which different values are determined for each region of current frame according to whether object or background that was not visible in previous frame is visible in current frame as result of comparison
1350
Mask warped high-resolution image of previous frame using disocclusion map
1360
Replace partial region of warped high-resolution image of previous frame that is masked by disocclusion map with low-resolution partial image
1370
Obtain high-resolution image of current frame by applying warped high-resolution image of previous frame in which partial region is replaced to neural network
1380
End

FIG. 13